# EUROPEAN PATENT APPLICATION

(11) **EP 4 727 128 A1**
(43) Date of publication of application: **15.04.2026**
(21) Application number: 24818595.1
(22) Date of filing: 03.06.2024
(51) Int. Cl.: H04N 19/186

(54) **GAIN MAP ENCODING METHOD AND APPARATUS, GAIN MAP DECODING METHOD AND APPARATUS, DEVICE, AND MEDIUM**

(30) Priority: 09.06.2023 CN 202310688306
(71) Applicant: Vivo Mobile Communication Co., Ltd., Dongguan, Guangdong 523863 (CN)
(72) Inventor: ZHAO, Zhijie, Dongguan, Guangdong 523863 (CN); ZHOU, Liao, Dongguan, Guangdong 523863 (CN)
(74) Representative: Conti, Marco
(86) International application number: PCT/CN2024/096983
(87) International publication number: WO 2024/251063

(57) **Abstract**

This application discloses a gain map encoding method and apparatus, a gain map decoding method and apparatus, a device, and a medium, and pertains to the field of communication technologies. The method in this application includes: obtaining at least one target image block in a gain map, where a luminance value of a pixel in the target image block is greater than a first threshold (301); determining target image block identification information of the gain map and an image block group based on the at least one target image block (302); and encoding the target image block identification information and the image block group to obtain encoding information of the gain map (303).

## Description

### CROSS-REFERENCE TO RELATED APPLICATIONS

This application claims priority to Chinese Patent Application No. 202310688306.X, filed with the China National Intellectual Property Administration on June 9, 2023 and entitled "GAIN MAP ENCODING METHOD AND APPARATUS, GAIN MAP DECODING METHOD AND APPARATUS, DEVICE, AND MEDIUM", which is incorporated herein by reference in its entirety.

### TECHNICAL FIELD

This application pertains to the field of communication technologies, and specifically relates to a gain map encoding method and apparatus, a gain map decoding method and apparatus, a device, and a medium.

### BACKGROUND

With advances in image acquisition and display technologies, high dynamic range imaging and display can be implemented on electronic devices (such as smartphones and tablet computers). Although increasingly more devices support display of a high dynamic range still image, there are still a large number of electronic devices that support only a standard-dynamic range (Standard Dynamic Range, SDR). To enable high-dynamic-range (HDR) images to achieve a good visual appearance on both HDR display devices and standard-dynamic-range (SDR) display devices, gain map based solutions for HDR capture, storage, and display are widely adopted in the industry..

However, as additional information, a gain map increases storage space of an image. Although storage space of the gain map can be reduced by storing the gain map by performing downsampling and then compressing and encoding, some information is lost in a downsampling process and image quality of the gain map is affected, and consequently, image quality of a reconstructed image is affected.

### SUMMARY

An objective of embodiments of this application is to provide a gain map encoding method and apparatus, a gain map decoding method and apparatus, a device, and a medium, which can resolve a problem that an existing gain map encoding manner affects image quality of a reconstructed image.

According to a first aspect, an embodiment of this application provides a gain map encoding method, including:
obtaining at least one target image block in a gain map, where a luminance value of a pixel in the target image block is greater than a first threshold;
determining target image block identification information of the gain map and an image block group based on the at least one target image block; and
encoding the target image block identification information and the image block group to obtain encoding information of the gain map.

According to a second aspect, an embodiment of this application provides a gain map encoding apparatus, including:
a first obtaining module, configured to obtain at least one target image block in a gain map, where a luminance value of a pixel in the target image block is greater than a first threshold;
a first processing module, configured to determine target image block identification information of the gain map and an image block group based on the at least one target image block; and
a second processing module, configured to encode the target image block identification information and the image block group to obtain encoding information of the gain map.

According to a third aspect, an embodiment of this application provides a gain map decoding method, including:
obtaining encoding information of a gain map;
decoding the encoding information to obtain an image block group and target image block identification information; and
reconstructing the gain map based on the image block group and the target image block identification information.

According to a fourth aspect, an embodiment of this application provides a gain map decoding apparatus, including:
a second obtaining module, configured to obtain encoding information of a gain map;
a decoding module, configured to decode the encoding information to obtain an image block group and target image block identification information; and
a reconstruction module, configured to reconstruct the gain map based on the image block group and the target image block identification information.

According to a fifth aspect, an embodiment of this application provides an electronic device. The electronic device includes a processor and a memory, the memory stores a program or instructions capable of being run on the processor, and when the program or instructions are executed by the processor, the steps of the method according to the first aspect or the third aspect are implemented.

According to a sixth aspect, an embodiment of this application provides a readable storage medium. The readable storage medium stores a program or instructions, and when the program or instructions are executed by a processor, the steps of the method according to the first aspect or the third aspect are implemented.

According to a seventh aspect, an embodiment of this application provides a chip. The chip includes a processor and a communication interface. The communication interface is coupled to the processor. The processor is configured to run a program or instructions to implement the method according to the first aspect or the third aspect.

According to an eighth aspect, an embodiment of this application provides a computer program product. The program product is stored in a storage medium, and the program product is executed by at least one processor, to implement the method according to the first aspect or the third aspect.

According to a ninth aspect, an embodiment of this application provides an electronic device. The electronic device is configured to perform the method according to the first aspect.

In the embodiments of this application, after at least one target image block that is in a gain map and that includes a pixel whose luminance value is greater than a first threshold is obtained by using the first threshold, identification information of the at least one target image block and an image block group including the at least one target image block can be determined for the at least one target image block, so as to encode the identification information and the at least one target image block to obtain encoding information of the gain map. In this way, only a portion of the data of the gain map is retained for encoding, so that while encoding efficiency is improved and storage space is saved, image quality of a reconstructed image can be improved.

### BRIEF DESCRIPTION OF DRAWINGS

FIG. 1 is a schematic diagram 1 of application of a gain map;
FIG. 2 is a schematic diagram 2 of application of a gain map;
FIG. 3 is a schematic flowchart 1 of a method according to an embodiment of this application;
FIG. 4 is a schematic diagram 1 of block partitioning of a gain map;
FIG. 5 is a schematic diagram 2 of block partitioning of a gain map;
FIG. 6 is a schematic diagram 3 of block partitioning of a gain map;
FIG. 7 is a schematic diagram 4 of block partitioning of a gain map;
FIG. 8 is a schematic diagram of allocation of an index value of a source image block;
FIG. 9 is a schematic diagram of combining target image blocks;
FIG. 10 is a schematic diagram of target image block identification information;
FIG. 11 is a schematic diagram of downsampling for an image block group;
FIG. 12 is a schematic flowchart 2 of a method according to an embodiment of this application;
FIG. 13 is a schematic flowchart 1 of application of a method according to an embodiment of this application;
FIG. 14 is a schematic flowchart 2 of application of a method according to an embodiment of this application;
FIG. 15 is a schematic diagram 1 of decoding of an image block group;
FIG. 16 is a schematic flowchart 3 of application of a method according to an embodiment of this application;
FIG. 17 is a schematic flowchart 4 of application of a method according to an embodiment of this application;
FIG. 18 is a schematic diagram 2 of decoding of an image block group;
FIG. 19 is a schematic diagram 1 of a module structure of an apparatus according to an embodiment of this application;
FIG. 20 is a schematic diagram 2 of a module structure of an apparatus according to an embodiment of this application;
FIG. 21 is a schematic diagram of a structure of an electronic device according to an embodiment of this application; and
FIG. 22 is a schematic diagram of a structure of an electronic device according to another embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

It should be noted that the terms "first", "second", and the like in the specification and claims of this application are intended to distinguish between similar objects but do not necessarily indicate a specific order or sequence. It should be understood that, data used in this way may be interchangeable under appropriate circumstances, so that the embodiments of this application can be implemented in an order other than that illustrated or described herein. Moreover, the terms such as "first", "second", and the like typically distinguish between objects of one category rather than limiting a quantity of objects. For example, there may be one or more first objects. In addition, in the specification and claims, "and/or" represents at least one of the connected objects, and the character "/" usually represents an "or" relationship between associated objects.

For ease of understanding, some content involved in the embodiments of this application is described below.

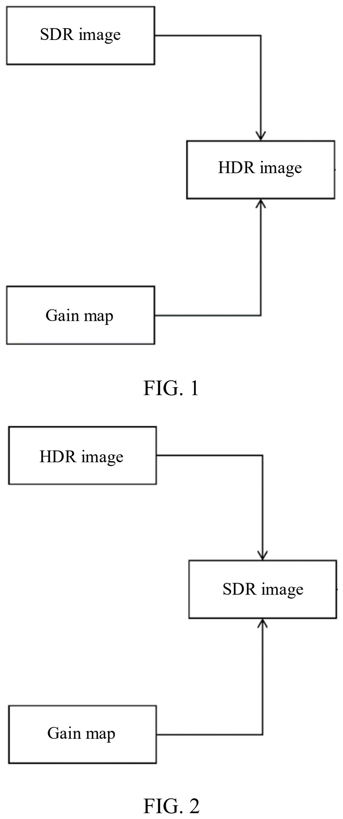

Gain map (also referred to as an enhancement map) is usually generated when an HDR image is created. As additional information, the gain map may be stored in a format of a specific file, for example, stored in a format of an image or additional information in a specific image format, and then encoded and transmitted. During display, the gain map is decoded. The gain map is generated based on an HDR image and an SDR image obtained after tone mapping corresponding to the HDR image. Use of the gain map may be: generating a corresponding HDR image by using the SDR and the gain map, or may be: generating a corresponding SDR image by using the HDR and the gain map, as shown in FIG. 1 and FIG. 2. In both formats, the gain map needs to be stored.

In addition, in a gain map-based HDR scheme, regions in the HDR image that need to be brightened by using the gain map are limited. This is mainly because: (1) If a brightened region is too large, a large area of the brightened region may cause discomfort to eyes. Therefore, during generation of the gain map, it is necessary to appropriately control the area of the brightened region. (2) If a brightened region is too large, visual experience advantages caused by the HDR are reduced. (3) In photographed natural content, highlighted regions are generally also small.

A gain map encoding method and apparatus, a gain map decoding method and apparatus, a device, and a medium provided in the embodiments of this application are described below in detail by using specific embodiments and application scenarios thereof with reference to the accompanying drawings.

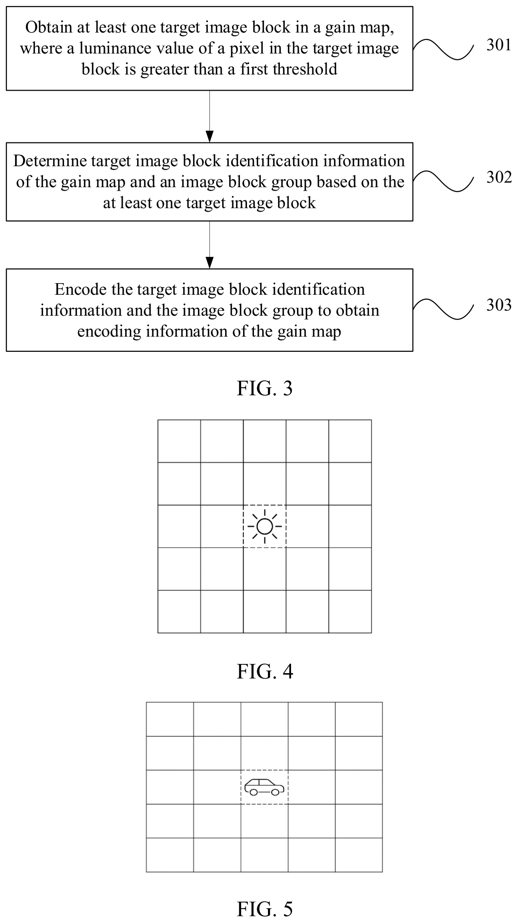

As shown in FIG. 3, a gain map encoding method in an embodiment of this application includes the following steps.

Step 301: Obtain at least one target image block in a gain map, where a luminance value of a pixel in the target image block is greater than a first threshold.

The first threshold is a preset luminance threshold. In this step, at least one target image block that is in the gain map and that includes a pixel (a highlighted pixel) whose luminance value is greater than the first threshold is selected by using the first threshold, so that encoding information related to only the at least one target image block is subsequently generated, and a redundant image block in the gain map is removed.

Step 302: Determine target image block identification information of the gain map and an image block group based on the at least one target image block.

The target image block identification information is identification information of the at least one target image block, and the image block group includes the at least one target image block. In other words, in this step, after step 301 is performed, identification information of the target image block in the gain map and the image block group including the target image block can be further determined.

Step 303: Encode the target image block identification information and the image block group to obtain encoding information of the gain map.

In this way, based on the foregoing steps 301 to 303, after the at least one target image block that is in the gain map and that includes a pixel whose luminance value is greater than the first threshold is obtained by using the first threshold, identification information of the at least one target image block and an image block group that includes the at least one target image block can be determined for the at least one target image block, so as to encode the identification information and the at least one target image block to obtain the encoding information of the gain map. In this way, only a portion of the data of the gain map is retained for encoding, so that while encoding efficiency is improved and storage space is saved, image quality of a reconstructed image can be improved.

It should be learned that the gain map is generated during HDR image acquisition, and original resolution of the gain map is W×H. Therefore, image resolution A×B of the target image block is less than or equal to W×H.

Optionally, the obtaining at least one target image block in a gain map includes:
partitioning the gain map into at least one source image block based on first image resolution; and
determining, as the at least one target image block, a source image block that is in the at least one source image block and in which a luminance value of a pixel is greater than the first threshold and a proportion is greater than a second threshold; where
the first image resolution is preset.

In this case, a value of the preset first image resolution is a size of the source image block. When the gain map is partitioned based on the first image resolution, one or more source image blocks whose sizes are equal to the first image resolution may be obtained, as shown in FIG. 4 and FIG. 5. In addition, the second threshold is further preset, that is, a proportion threshold of highlighted pixels in the source image block, to identify at least one target image block in the at least one source image block, that is, a proportion of highlighted pixels in the obtained target image block is greater than the second threshold.

In an implementation, the first image resolution is less than or equal to W×H, for example, 8×8, 16×16, 64×64, 64×32, 16×64, 128×128, or 256×256. A value of the second threshold may be 70%, 80%, or the like.

Optionally, the obtaining at least one target image block in a gain map includes:
identifying a target region in the gain map based on the first threshold;
determining second image resolution based on a size of the target region and a first condition, where the first condition includes: a proportion of pixels that are in each image block obtained after partitioning and whose luminance value is greater than the first threshold is greater than a third threshold or less than a fourth threshold;
partitioning the gain map into at least one source image block based on the second image resolution; and
determining, as the at least one target image block, a source image block that is in the at least one source image block and in which luminance value of a pixel is greater than the first threshold and a proportion is greater than a third threshold.

The third threshold and the fourth threshold are similar to the foregoing second threshold, and are proportion thresholds of highlighted pixels in the source image block. In this embodiment, considering that a relatively low proportion of highlighted pixels in the target image block affects encoding efficiency, to improve the encoding efficiency, the first condition is preset, so that by using the constraints of the third threshold and the fourth threshold, the second image resolution can ensure that obtained source image blocks can be classified into two types: one is a source image block in which a proportion of highlighted pixels is larger, and the other is a source image block in which a proportion of highlighted pixels is smaller.

Therefore, after a target region that is in the gain map and in which a luminance value of a pixel is greater than the first threshold is identified, applicable second image resolution can be determined with reference to a size (or may be understood as an area) of the target region and the first condition. Therefore, after the gain map is partitioned based on the second image resolution, a source image block in which a proportion of highlighted pixels is greater than the third threshold and a source image block in which a proportion of highlighted pixels is smaller than the fourth threshold are obtained, and finally the target image block, that is, the source image block in which the proportion of highlighted pixels is greater than the third threshold, is determined.

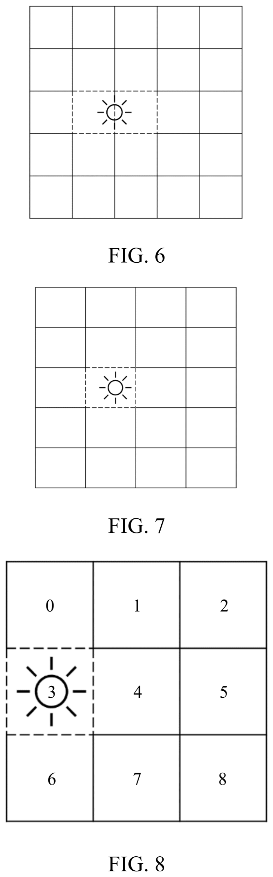

A process of determining the second image resolution is a process of adaptively adjusting image resolution based on the size of the target region and the first condition. For example, after image resolution A1×B1 is determined for the first time, the gain map is partitioned based on the image resolution A1×B1 to obtain a plurality of image blocks shown in FIG. 6. Because there is an image block (a dashed line region in the figure) that does not meet the first condition, the image resolution needs to be further adjusted. After a plurality of image blocks that meet the first condition and that are shown in FIG. 7 are obtained by partitioning the gain map based on image resolution A2×B2, the image resolution A2×B2 is determined as the second image resolution.

The third threshold may be the same as or different from the second threshold.

In an implementation, a value of the third threshold may be 90%, 95%, or the like, and a value of the fourth threshold may be 10%, 5%, or the like.

Optionally, in this embodiment, a shape of the source image block may be a square, as shown in FIG. 4; or may be a rectangle, as shown in FIG. 5.

It should be noted that in this embodiment, identifying the target region and the target image block may be implemented based on artificial intelligence learning, and details are not described herein again.

Optionally, the determining target image block identification information of the gain map and an image block group based on the at least one target image block includes:
generating the target image block identification information based on a location of the at least one target image block in the gain map; and
reassembling the at least one target image block based on a first strategy, to generate the image block group, where the first strategy indicates a manner of combining the at least one target image block.

The target image block identification information is used to indicate location information of the at least one target image block in the gain map. For example, after the gain map is partitioned, index values starting from 0 of source image blocks are allocated in a preset order, for example, from left to right (as shown in FIG. 8) or from top to bottom (not shown in the figure). Therefore, the target image block identification information may be generated based on the index values.

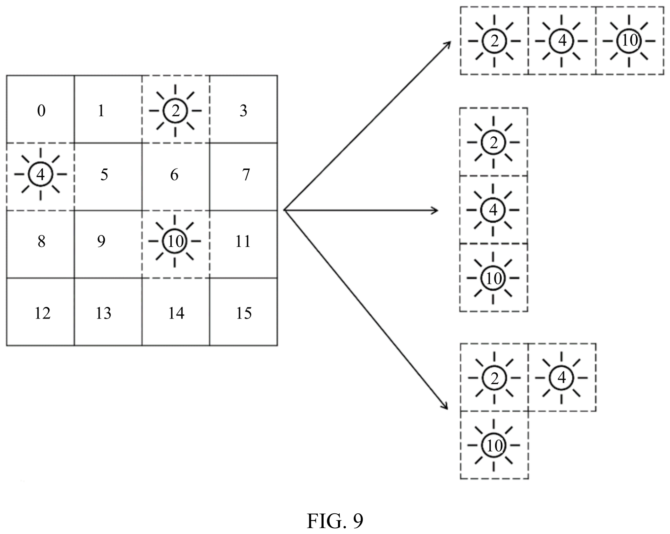

The first strategy is preset and is used to indicate a manner of combining target image blocks. For example, as shown in FIG. 9, the target image blocks are horizontally combined based on the index values, vertically combined based on the index values, or combined in a zig-zag (zig-zag) form based on the index values. Herein, the target image blocks are combined in a sequence of index values, so as to facilitate decoding and reconstruction at a decoding end.

Certainly, the target image blocks may be alternatively combined in another manner, which is not limited to that shown in the figure.

Optionally, in this embodiment, the target image block identification information is binary bit information, and each piece of binary bit information corresponds to one source image block in the gain map and indicates whether the source image block is the target image block.

Different values of each piece of binary bit information may be preset to separately indicate whether the source image block is the target image block. For example, if the binary bit information being "1" indicates that the source image block is a target image block, the binary bit information being "0" indicates that the source image block is a non-target image block; or if the binary bit information being "0" indicates that the source image block is a target image block, the binary bit information being "1" indicates that the source image block is a non-target image block.

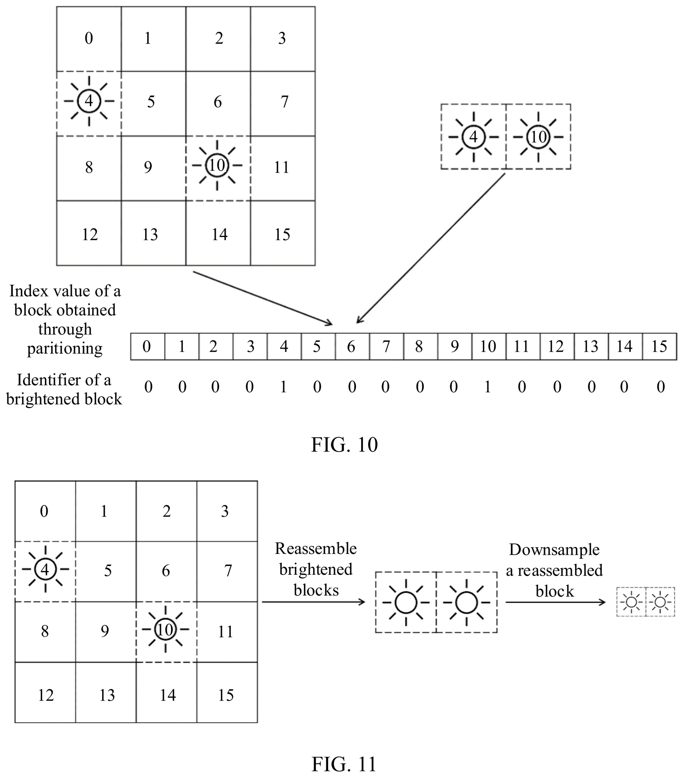

It is assumed that it is preset that the binary bit information being "1" indicates that the source image block is a target image block, and the binary bit information being "0" indicates that the source image block is a non-target image block. Therefore, as shown in FIG. 10, when the gain map is partitioned into 16 source image blocks, and index values 0 to 15 of the source image blocks are allocated from left to right, where the target image blocks are a source image block whose index value is 4 and a source image block whose index value is 10, the target image block identification information (also referred to as an identifier of a brightened block) is information "0000100000100000" whose length is 16 bits.

Certainly, for example target image block identification information, when the decoding end can only determine, by using a value of the binary bit information, whether the source image block is a target image block, and cannot interpret a location indication of the target image block by the binary bit information, in addition to the identifier of the brightened block, the target image block identification information further needs to indicate the index value of the source image block, so as to assist the decoding end in determining a location of the target image block and completing the decoding successfully.

In this embodiment, after the target image block identification information and the image block group are generated, the gain map may be encoded by separately encoding the target image block identification information and the image block group.

Optionally, in this embodiment, the encoding the target image block identification information and the image block group to obtain encoding information of the gain map includes:
encoding the target image block identification information to obtain first information;
perform downsampling on the image block group to obtain a to-be-encoded image;
encoding the to-be-encoded image to obtain second information; and
obtaining the encoding information of the gain map based on the first information and the second information.

To further reduce space occupancy of the encoding information and improve encoding efficiency, for the image block group, downsampling is performed first to obtain the to-be-encoded image, and then the obtained to-be-encoded image is encoded, as shown in FIG. 11. Downsampling such as 1/4 downsampling or 1/16 downsampling may be performed on the image block group.

Optionally, in this embodiment, the encoding the target image block identification information and the image block group to obtain encoding information of the gain map includes:
encoding the target image block identification information to obtain first information;
encoding the image block group to obtain third information; and
obtaining the encoding information of the gain map based on the first information and the third information.

In other words, after the target image block identification information is generated, the target image block identification information is directly encoded to obtain the first information; and when the image block group is generated, the image block group is directly encoded to obtain the third information, and downsampling does not need to be performed on the image block group. The encoding information of the gain map includes the first information and the third information.

The target image block identification information may be encoded in an encoding manner such as run-length encoding (Run-Length Encoding) or another encoding manner.

For the image block group, encoding may be performed based on an encoding standard such as JPEG, AVIF, or HEIF. In an encoding process, spatial redundancy information is typically removed through spatial transform such as discrete cosine transform (Discrete Cosine Transform, DCT) or DCT-like transform (such as DCT-like integer transform in video and image compression standards). Due to features of DCT transform, redundancy removing efficiency is high in a flat region.

In an implementation, an encoding manner used for the image block group or the to-be-encoded image may be lossless compression, or may be lossy compression.

Optionally, the method further includes:
determining auxiliary information used for encoding the gain map; and
storing the encoding information and the auxiliary information.

The auxiliary information is related information used when the target image block identification information and the image block group are independently encoded. If the auxiliary information is also stored when the encoding information of the gain map is stored, it is convenient to decode the encoding information of the gain map based on the auxiliary information.

In this embodiment, the auxiliary information may also be understood as metadata (Meta data).

Optionally, the auxiliary information includes at least one of the following:
first image resolution;
second image resolution;
original resolution of the gain map;
an index of the at least one target image block;
whether to encode the target image block;
an encoding manner;
a downsampling ratio; and
a strategy used for reassembling the at least one target image block.

The original resolution of the gain map is generally the same as resolution of an HDR/SDR image, and the original resolution of the gain map is not obligatory in the auxiliary information.

The index of the at least one target image block is determined after an index of the source image block is allocated, which may indicate a location of the target image block, for example, an index value of a block obtained through block partitioning and shown in FIG. 10.

The auxiliary information may indicate, by including whether to encode the target image block, whether the encoding information of the gain map includes the first information and the second information, so that the decoding end implements effective decoding.

The encoding manner is at least one of an encoding manner of the target image block and an encoding manner of the target image block identification information.

The downsampling ratio is a ratio, such as 1/4 or 1/16, used for performing downsampling on the image block group after the image block group is determined.

The strategy used for reassembling at least one target image block is the foregoing first strategy, and is not described herein again.

Certainly, in addition to the foregoing content, the auxiliary information may further include other content, which is not listed one by one herein.

In conclusion, after at least one target image block that is in a gain map and that includes a pixel whose luminance value is greater than a first threshold is obtained by using the first threshold, identification information of the at least one target image block and an image block group including the at least one target image block can be determined for the at least one target image block, so as to encode the identification information and the at least one target image block to obtain encoding information of the gain map. In this way, only a portion of the data of the gain map is retained for encoding, so that while encoding efficiency is improved and storage space is saved, image quality of a reconstructed image can be improved.

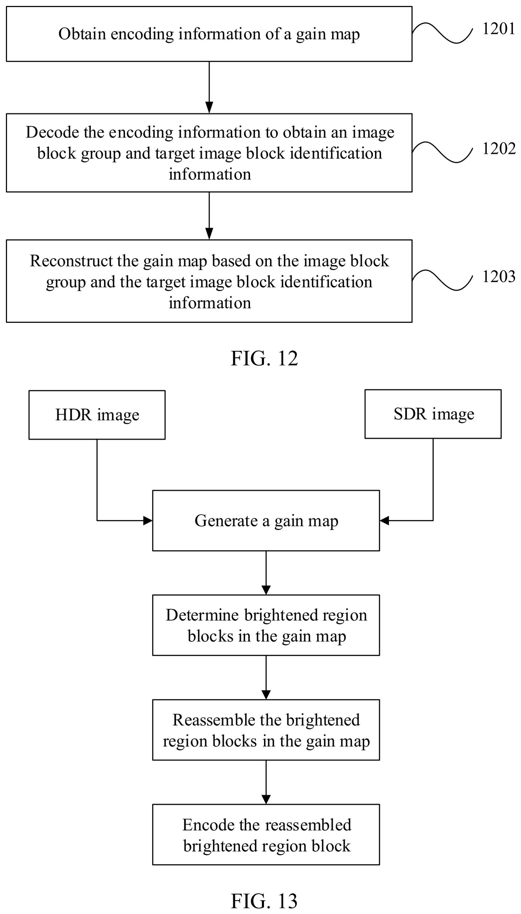

As shown in FIG. 12, a gain map decoding method in an embodiment of this application includes the following steps.

Step 1201: Obtain encoding information of a gain map.

Step 1202: Decode the encoding information to obtain an image block group and target image block identification information.

Step 1203: Reconstruct the gain map based on the image block group and the target image block identification information.

In this way, based on the foregoing steps 1201 to 1203, after the encoding information of the gain map that is obtained through encoding by using the method in the foregoing embodiment is obtained, the encoding information is decoded to obtain the image block group and the target image block identification information, and the gain map is further reconstructed based on the image block group and the target image block identification information. If a decoding end is also an encoding end, obtaining the encoding information of the gain map may be: extracting the encoding information of the gain map from storage space. If the decoding end is different from the encoding end, obtaining the encoding information of the gain map may be: receiving, by the decoding end, the encoding information of the gain map from the encoding end.

Specifically, when the gain map needs to be used, for example, an SDR/HDR image is generated, stored encoding information is decoded to obtain the image block group and the target image block identification information. Then, the gain map is further reconstructed based on the image block group and the target image block identification information that are obtained through decoding.

Optionally, in this embodiment, the reconstructing the gain map based on the image block group and the target image block identification information includes:
generating at least one target image block based on a first strategy and the image block group; and
reconstructing the gain map based on the at least one target image block and the target image block identification information; where
the first strategy indicates a manner of combining the at least one target image block.

In other words, considering a manner of generating the image block group in an encoding process, the at least one target image block is first restored with reference to the first strategy and the image block group obtained through decoding. Then, the gain map is reconstructed by using the at least one target image block and the target image block identification information obtained through decoding.

Optionally, the target image block identification information is binary bit information, and each piece of binary bit information corresponds to one source image block in the gain map and indicates whether the source image block is a target image block.

Optionally, the encoding information of the gain map includes first information and second information, and the decoding the encoding information to obtain an image block group and target image block identification information includes:
decoding the second information to obtain a decoded image;
performing upsampling on the decoded image to obtain the target image block group; and
decoding the first information to obtain the target image block identification information.

In other words, if downsampling is performed on the image block group in the encoding process, after the second information is decoded and the decoded image is obtained, upsampling is performed on the decoded image to obtain the target image block group.

Optionally, the encoding information of the gain map includes first information and third information, and the decoding the encoding information to obtain an image block group and target image block identification information includes:
decoding the third information to obtain the image block group; and
decoding the first information to obtain the target image block identification information.

In other words, if the image block group is not downsampled in the encoding process, the target image block group is directly obtained after the third information is decoded.

Certainly, in a decoding process, auxiliary information used in encoding may also be used to implement effective decoding.

Optionally, the auxiliary information is extracted from storage space together with the encoding information of the gain map, or is received together with the encoding information of the gain map.

Optionally, in this embodiment, after the reconstructing the gain map based on the image block group and the target image block identification information, the method further includes:
reconstructing a high-dynamic range HDR image based on the gain map and a standard-dynamic range SDR image; or
reconstructing a generated SDR image based on the gain map and an HDR image.

In this way, a required HDR image or SDR image is generated based on the gain map.

It should be noted that the method is implemented in cooperation with the gain map coding method in the foregoing embodiments. An implementation of the foregoing method embodiment is applicable to this method, and a same technical effect can also be achieved.

Application of the method in the embodiments of this application is described below with reference to FIG. 13 to FIG. 18.

Scenario 1: As shown in FIG. 13, a gain map is generated in an HDR image acquisition phase. Then, a brightened region in the gain map is identified, that is, a target region (the brightened region) that is in the gain map and in which a pixel value is greater than a first threshold is identified. Next, a brightened region block in the gain map is determined, that is, after second image resolution is determined based on a size of the brightened region and a first condition, the gain map is partitioned into at least one source image block based on the second image resolution, and at least one target image block (the brightened region block) is determined from the at least one source image block. Next, brightened region blocks in the gain map are reassembled, that is, the at least one target image block is reassembled based on a first strategy. Next, the reassembled brightened region block are encoded. Certainly, in addition to encoding information of the reassembled brightened region blocks, encoding information of the gain map further includes encoding information of target image block identification information. A step diagram of generating the target image block identification information and encoding the target image block identification information is not shown.

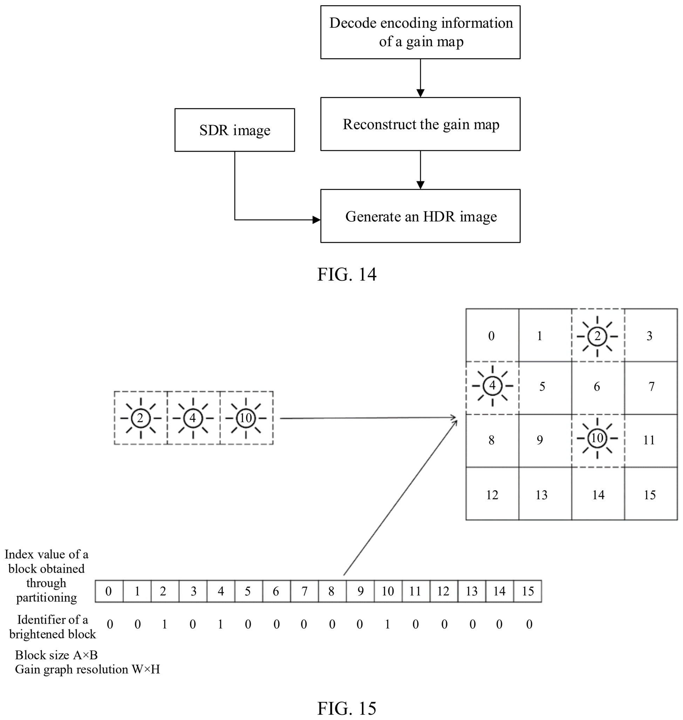

If a stored image format is an SDR image and corresponding encoding information of the gain map, when an HDR image is displayed on a device with an HDR capability, as shown in FIG. 14, the encoding information of the gain map needs to be decoded to obtain an image block group of the gain map and the target image block identification information. Next, the gain map is reconstructed. In a reconstruction process, the gain map with original resolution is reconstructed based on auxiliary information (for example, first image resolution, second image resolution, original image resolution of the gain map, and an index of the target image block) and the image block group of the gain map and the target image block identification information that are obtained through decoding, as shown in FIG. 15. Next, the HDR image is generated based on the reconstructed gain map and the SDR image.

If a decoding end is also an encoding end, only encoding information of a to-be-decoded gain map and corresponding auxiliary information need to be extracted from the storage space before decoding, and then decoding is performed. If the decoding end is different from the encoding end, encoding information of the to-be-decoded gain map and corresponding auxiliary information that are sent by the encoding end need to be received before decoding, and then decoding is performed.

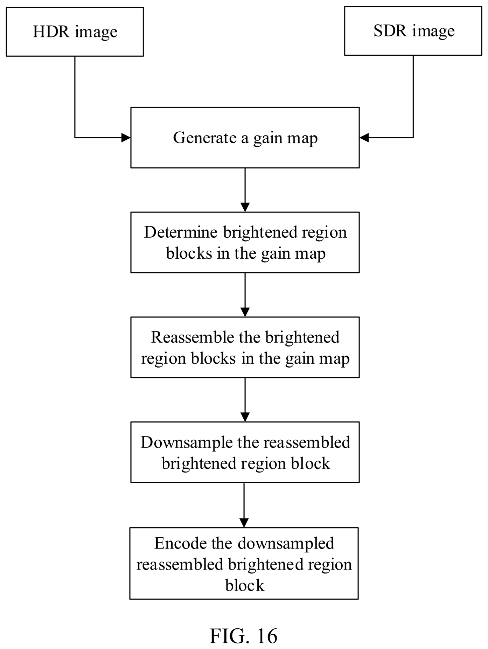

Scenario 2: As shown in FIG. 16, a gain map is generated in an HDR image acquisition phase. Then, a brightened region in the gain map is identified, that is, a target region (the brightened region) that is in the gain map and in which a pixel value is greater than a first threshold is identified. Next, a brightened region block in the gain map is determined, that is, after second image resolution is determined based on a size of the brightened region and a first condition, the gain map is partitioned into at least one source image block based on the second image resolution, and at least one target image block (the brightened region block) is determined from the at least one source image block. Next, brightened region blocks in the gain map are reassembled, that is, the at least one target image block is reassembled based on a first strategy. Next, downsampling is performed on the reassembled brightened region blocks, that is, 1/4 or 1/6 downsampling is performed on the reassembled brightened region blocks. Next, the downsampled brightened region blocks are encoded. Certainly, in addition to encoding information of the reassembled brightened region blocks, encoding information of the gain map further includes encoding information of target image block identification information. A step diagram of generating the target image block identification information and encoding the target image block identification information is not shown.

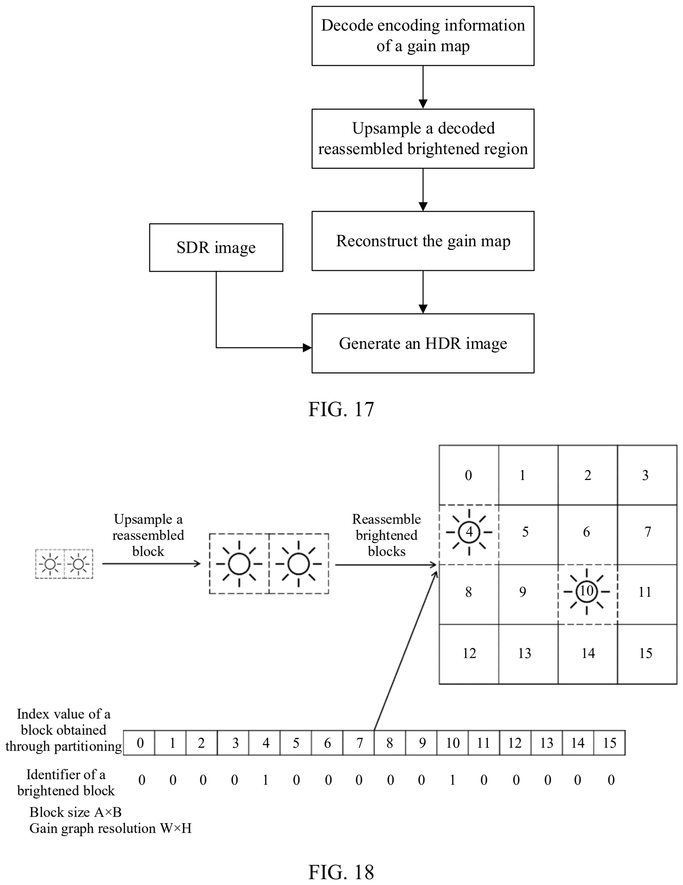

If a stored image format is an SDR image and corresponding encoding information of the gain map, when an HDR image is displayed on a device with an HDR capability, as shown in FIG. 17, the encoding information of the gain map needs to be decoded. In an encoding process, downsampling is performed on the reassembled brightened region blocks, and therefore, a next step is to perform upsampling on the decoded reassembled brightened region blocks. Next, the gain map is reconstructed. In a reconstruction process, the gain map with original resolution is reconstructed based on auxiliary information (for example, first image resolution, second image resolution, original image resolution of the gain map, and an index of the target image block) and the image block group of the gain map that is obtained after upsampling and the target image block identification information, as shown in FIG. 18. Next, the HDR image is generated based on the reconstructed gain map and the SDR image.

If a stored image format is HDR and corresponding gain map information, a corresponding decoding procedure is similar to the foregoing procedure, and the only difference is: the generated SDR image is based on a decoded HDR image, the encoding information of the gain map, and the auxiliary information.

In this embodiment, the gain map may be a single channel, or may be multi-channel such as R/G/B.

The gain map encoding method provided in the embodiments of this application may be performed by a gain map encoding apparatus. In the embodiments of this application, that the gain map encoding apparatus performs the gain map encoding method is used as an example to describe the gain map encoding apparatus provided in the embodiments of this application.

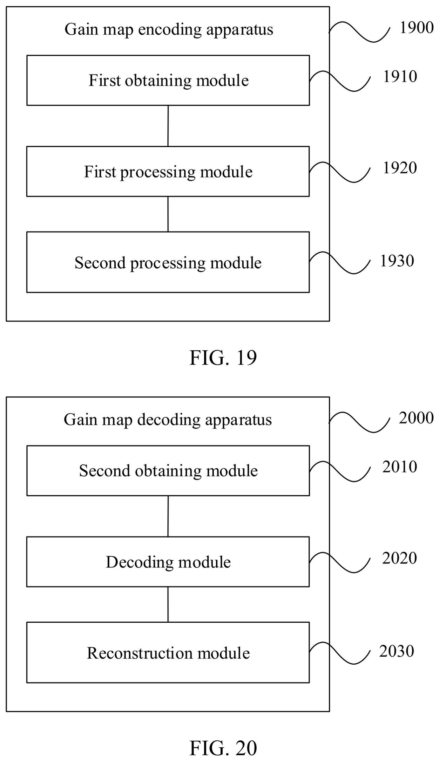

As shown in FIG. 19, a gain map encoding apparatus 1900 in an embodiment of this application includes:
a first obtaining module 1910, configured to obtain at least one target image block in a gain map, where a luminance value of a pixel in the target image block is greater than a first threshold;
a first processing module 1920, configured to determine target image block identification information of the gain map and an image block group based on the at least one target image block; and
a second processing module 1930, configured to encode the target image block identification information and the image block group to obtain encoding information of the gain map.

Optionally, the first obtaining module includes:
a third processing sub-module, configured to partition the gain map into at least one source image block based on the first image resolution; and
a first identifying sub-module, configured to determine, as the at least one target image block, a source image block that is in the at least one source image block and in which a luminance value of a pixel is greater than the first threshold and a proportion is greater than a second threshold; where
the first image resolution is preset.

Optionally, the first obtaining module includes:
a second identifying sub-module, configured to identify a target region in the gain map based on the first threshold;
a fourth processing sub-module, configured to determine second image resolution based on a size of the target region and a first condition, where the first condition includes: a proportion of pixels that are in each image block obtained after partitioning and whose luminance value is greater than the first threshold is greater than a third threshold or less than a fourth threshold;
a fifth processing sub-module, configured to partition the gain map into at least one source image block based on the second image resolution; and
a sixth processing sub-module, configured to determine, as the at least one target image block, a source image block that is in the at least one source image block and in which a luminance value of a pixel is greater than the first threshold and a proportion is greater than a third threshold.

Optionally, the first processing module includes:
a first processing sub-module, configured to generate the target image block identification information based on a location of the at least one target image block in the gain map; and
a second processing sub-module, configured to reassemble the at least one target image block based on a first strategy, to generate the image block group, where the first strategy indicates a manner of combining the at least one target image block.

Optionally, the target image block identification information is binary bit information, and each piece of binary bit information corresponds to one source image block in the gain map and indicates whether the source image block is the target image block.

Optionally, the second processing module includes:
a seventh processing sub-module, configured to encode the target image block identification information to obtain first information;
an eighth processing sub-module, configured to perform downsampling on the image block group to obtain a to-be-encoded image;
a ninth processing sub-module, configured to encode the to-be-encoded image to obtain second information; and
a tenth processing sub-module, configured to obtain the encoding information of the gain map based on the first information and the second information.

Optionally, the second processing module is further configured to:
encode the target image block identification information to obtain first information;
encode the image block group to obtain third information; and
obtain the encoding information of the gain map based on the first information and the third information.

Optionally, the apparatus further includes:
a fifth processing module, configured to determine auxiliary information used for encoding the gain map; and
a storage module, configured to store the encoding information and the auxiliary information.

Optionally, the auxiliary information includes at least one of the following:
first image resolution;
second image resolution;
original resolution of the gain map;
an index of the at least one target image block;
whether to encode the target image block;
an encoding manner;
a downsampling ratio; and
a strategy used for reassembling the at least one target image block.

Optionally, the apparatus further includes:
a third processing module, configured to perform decoding based on the encoding information when the gain map needs to be used, to obtain the image block group and the target image block identification information; and
a fourth processing module, configured to reconstruct the gain map based on the auxiliary information, the image block group, and the target image block identification information.

After at least one target image block that is in a gain map and that includes a pixel whose luminance value is greater than a first threshold is obtained by using the first threshold, the apparatus can determine, for the at least one target image block, identification information of the at least one target image block and an image block group including the at least one target image block, so as to encode the identification information and the at least one target image block to obtain encoding information of the gain map. In this way, only a portion of the data of the gain map is retained for encoding, so that while encoding efficiency is improved and storage space is saved, image quality of a reconstructed image can be improved.

The gain map encoding apparatus in this embodiment of this application may be an electronic device, or may be a component such as an integrated circuit or a chip in an electronic device. The electronic device may be a terminal, or may be another device different from a terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook or a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in this embodiment of this application.

The gain map encoding apparatus in this embodiment of this application may be an apparatus having an operating system. The operating system may be an Android (Android) operating system, may be an iOS operating system, or may be another possible operating system. This is not specifically limited in this embodiment of this application.

The gain map encoding apparatus provided in this embodiment of this application can implement all the processes implemented in the method embodiments in FIG. 2 to FIG. 18. To avoid repetition, details are not described herein again.

As shown in FIG. 20, a gain map decoding apparatus 2000 in an embodiment of this application includes:
a second obtaining module 2010, configured to obtain encoding information of a gain map;
a decoding module 2020, configured to decode the encoding information to obtain an image block group and target image block identification information; and
a reconstruction module 2030, configured to reconstruct the gain map based on the image block group and the target image block identification information.

Optionally, the reconstruction module includes:
a generation sub-module, configured to generate at least one target image block based on a first strategy and the image block group; and
a reconstruction sub-module, configured to reconstruct the gain map based on the at least one target image block and the target image block identification information; where
the first strategy indicates a manner of combining the at least one target image block.

Optionally, the target image block identification information is binary bit information, and each piece of binary bit information corresponds to one source image block in the gain map and indicates whether the source image block is the target image block.

Optionally, the encoding information of the gain map includes first information and second information, and the decoding module is further configured to:
decode the second information to obtain a decoded image;
perform upsampling on the decoded image to obtain the target image block group; and
decode the first information to obtain the target image block identification information.

Optionally, the encoding information of the gain map includes first information and third information, and the decoding module is further configured to:
decode the third information to obtain the image block group; and
decode the first information to obtain the target image block identification information.

Optionally, the apparatus further includes:
an image generation module, configured to reconstruct a high-dynamic range HDR image based on the gain map and a standard-dynamic range SDR image; or
reconstruct a generated SDR image based on the gain map and an HDR image.

After obtaining the encoding information of the encoded gain map, the apparatus decodes the encoded gain map to obtain the image block group and the target image block identification information, and further reconstructs the gain map based on the image block group and the target image block identification information.

The gain map decoding apparatus in this embodiment of this application may be an electronic device, or may be a component such as an integrated circuit or a chip in an electronic device. The electronic device may be a terminal, or may be another device different from a terminal. For example, the electronic device may be a mobile phone, a tablet computer, a notebook computer, a palmtop computer, an in-vehicle electronic device, an MID, an AR/VR device, a robot, a wearable device, a UMPC, a netbook, a PDA, or the like, or may be a server, a NAS, a PC, a TV, a teller machine, a self-service machine, or the like, which is not specifically limited in this embodiment of this application.

The gain map decoding apparatus in this embodiment of this application may be an apparatus having an operating system. The operating system may be an Android (Android) operating system, may be an iOS operating system, or may be another possible operating system. This is not specifically limited in this embodiment of this application.

The gain map decoding apparatus provided in this embodiment of this application can implement all the processes implemented in the method embodiments in FIG. 12 to FIG. 18. To avoid repetition, details are not described herein again.

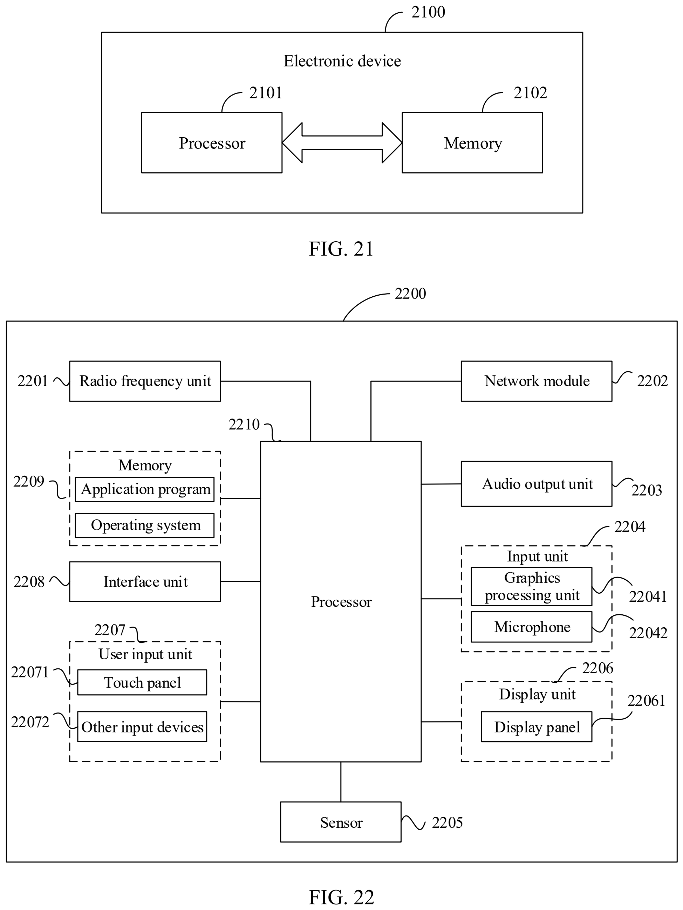

Optionally, as shown in FIG. 21, an embodiment of this application further provides an electronic device 2100, including a processor 2101 and a memory 2102. The memory 2102 stores a program or instructions capable of being run on the processor 2101. When the program or the instructions are executed by the processor 2101, the steps in the foregoing embodiment of the gain map encoding method or the gain map decoding method are implemented, and a same technical effect can be achieved. To avoid repetition, details are not described herein again.

It should be noted that the electronic device in this embodiment of this application includes the foregoing mobile electronic device and a non-mobile electronic device.

FIG. 22 is a schematic diagram of a hardware structure of an electronic device according to an embodiment of this application.

The electronic device 2200 includes but is not limited to components such as a radio frequency unit 2201, a network module 2202, an audio output unit 2203, an input unit 2204, a sensor 2205, a display unit 2206, a user input unit 2207, an interface unit 2208, a memory 2209, and a processor 2210.

A person skilled in the art may understand that the electronic device 2200 may further include a power supply (for example, a battery) that supplies power to each component, and the power supply may be logically connected to the processor 2210 by using a power management system, to implement functions such as charging management, discharging management, and power consumption management by using the power management system. The structure of the electronic device shown in FIG. x constitutes no limitation on the electronic device. The electronic device may include more or fewer components than those shown in the figure, or combine some components, or have different component arrangements. Details are not described herein again.

The processor 2210 is configured to: obtain at least one target image block in a gain map, where a luminance value of a pixel in the target image block is greater than a first threshold;
determine target image block identification information of the gain map and an image block group based on the at least one target image block; and
encode the target image block identification information and the image block group to obtain encoding information of the gain map.

After at least one target image block that is in a gain map and that includes a pixel whose luminance value is greater than a first threshold is obtained by using the first threshold, the electronic device can determine, for the at least one target image block, identification information of the at least one target image block and an image block group including the at least one target image block, so as to encode the identification information and the at least one target image block to obtain encoding information of the gain map. In this way, only a portion of the data of the gain map is retained for encoding, so that while encoding efficiency is improved and storage space is saved, image quality of a reconstructed image can be improved.

Optionally, the processor 2210 is further configured to:
partition the gain map into at least one source image block based on first image resolution; and
determine, as the at least one target image block, a source image block that is in the at least one source image block and in which a luminance value of a pixel is greater than the first threshold and a proportion is greater than a second threshold; where
the first image resolution is preset.

Optionally, the processor 2210 is further configured to:
identify a target region in the gain map based on the first threshold;
determine second image resolution based on a size of the target region and a first condition, where the first condition includes: a proportion of pixels that are in each image block obtained after partitioning and whose luminance value is greater than the first threshold is greater than a third threshold or less than a fourth threshold;
partition the gain map into at least one source image block based on the second image resolution; and
determine, as the at least one target image block, a source image block that is in the at least one source image block and in which a luminance value of a pixel is greater than the first threshold and a proportion is greater than a third threshold.

Optionally, the processor 2210 is further configured to:
generate the target image block identification information based on a location of the at least one target image block in the gain map; and
reassemble the at least one target image block based on a first strategy, to generate the image block group, where the first strategy indicates a manner of combining the at least one target image block.

Optionally, the target image block identification information is binary bit information, and each piece of binary bit information corresponds to one source image block in the gain map and indicates whether the source image block is the target image block.

Optionally, the processor 2210 is further configured to:
encode the target image block identification information to obtain first information;
perform downsampling on the image block group to obtain a to-be-encoded image;
encode the to-be-encoded image to obtain second information; and
obtain the encoding information of the gain map based on the first information and the second information.

Optionally, the processor 2210 is further configured to:
determine auxiliary information used for encoding the gain map; and
store the encoding information and the auxiliary information.

Optionally, the auxiliary information includes at least one of the following:
first image resolution;
second image resolution;
original resolution of the gain map;
an index of the at least one target image block;
whether to encode the target image block;
an encoding manner;
a downsampling ratio; and
a strategy used for reassembling the at least one target image block.

Optionally, the processor 2210 is further configured to:
decode the encoding information to obtain the image block group and the target image block identification information; and
reconstruct the gain map based on the auxiliary information, the image block group and the target image block identification information.

It should be understood that in this embodiment of this application, the input unit 2204 may include a graphics processing unit (Graphics Processing Unit, GPU) 22041 and a microphone 22042. The graphics processing unit 22041 processes image data of a still picture or a video obtained by an image capture apparatus (such as a camera) in a video capture mode or an image capture mode. The display unit 2206 may include a display panel 22061, and the display panel 22061 may be configured in a form of a liquid crystal display, an organic light-emitting diode, or the like. The user input unit 2207 includes at least one of a touch panel 22071 or other input devices 22072. The touch panel 22071 is also referred to as a touchscreen. The touch panel 22071 may include two parts: a touch detection apparatus and a touch controller. The another input device 22072 may include but is not limited to a physical keyboard, a function key (such as a volume control key or an on/off key), a trackball, a mouse, and a joystick. Details are not described herein again.

The memory 2209 may be configured to store a software program and various data. The memory 2209 may mainly include a first storage area for storing a program or instructions and a second storage area for storing data. The first storage area may store an operating system, an application program or instructions required by at least one function (for example, a sound play function or an image play function), and the like. In addition, the memory 2209 may include a volatile memory or a non-volatile memory, or the memory 2209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 2209 in this embodiment of this application includes but is not limited to these memories and any other suitable type of memory.

The processor 2210 may include one or more processing units. Optionally, the processor 2210 integrates an application processor and a modem processor. The application processor mainly processes operations related to an operating system, a user interface, an application program, and the like. The modem processor, for example, a baseband processor, mainly processes a wireless communication signal. It may be understood that, the foregoing modem processor may not be integrated into the processor 2210.

Certainly, the electronic device shown in FIG. 22 may also apply the gain map decoding method shown in the foregoing embodiment, and details are not described herein again.

An embodiment of this application further provides a readable storage medium. The readable storage medium stores a program or instructions, and when the program or instructions are executed by a processor, the processes of the foregoing embodiment of the gain map encoding method or the gain map decoding method are implemented, and a same technical effect can be achieved. To avoid repetition, details are not described herein again.

The processor is a processor in the electronic device in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiment of the gain map encoding method or the gain map decoding method, and a same technical effect can be achieved. To avoid repetition, details are not described herein again.

It should be understood that, the chip mentioned in this embodiment of this application may also be referred to as a system-level chip, a system chip, a chip system, or a system on chip.

An embodiment of this application provides a computer program product. The program product is stored in a storage medium. The program product is executed by at least one processor to implement the processes of the foregoing embodiment of the gain map encoding method or the gain map decoding method, and a same technical effect can be achieved. To avoid repetition, details are not described herein again.

It should be noted that in this specification, the term "include", "comprise", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the existence of additional identical elements in the process, method, article, or apparatus that includes the element. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples can be combined in other examples.

According to the foregoing descriptions of the implementations, a person skilled in the art can clearly understand that the method in the foregoing embodiments can be implemented by software and a necessary general-purpose hardware platform, or certainly can be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the protection scope of the claims, and all such manners fall within the protection scope of this application.

## Claims

1. A gain map encoding method, comprising:
obtaining at least one target image block in a gain map, wherein a luminance value of a pixel in the target image block is greater than a first threshold;
determining target image block identification information of the gain map and an image block group based on the at least one target image block; and
encoding the target image block identification information and the image block group to obtain encoding information of the gain map.

2. The method according to claim 1, wherein the obtaining at least one target image block in a gain map comprises:
partitioning the gain map into at least one source image block based on first image resolution; and
determining, as the at least one target image block, a source image block that is in the at least one source image block and in which a luminance value of a pixel is greater than the first threshold and a proportion is greater than a second threshold; wherein
the first image resolution is preset.

3. The method according to claim 1, wherein the obtaining at least one target image block in a gain map comprises:
identifying a target region in the gain map based on the first threshold;
determining second image resolution based on a size of the target region and a first condition, wherein the first condition comprises: a proportion of pixels that are in each image block obtained after partitioning and whose luminance value is greater than the first threshold is greater than a third threshold or less than a fourth threshold;
partitioning the gain map into at least one source image block based on the second image resolution; and
determining, as the at least one target image block, a source image block that is in the at least one source image block and in which a luminance value of a pixel is greater than the first threshold and a proportion is greater than a third threshold.

4. The method according to claim 1, wherein the determining target image block identification information of the gain map and an image block group based on the at least one target image block comprises:
generating the target image block identification information based on a location of the at least one target image block in the gain map; and
reassembling the at least one target image block based on a first strategy, to generate the image block group, wherein the first strategy indicates a manner of combining the at least one target image block.

5. The method according to claim 4, wherein the target image block identification information is binary bit information, and each piece of binary bit information corresponds to one source image block in the gain map and indicates whether the source image block is the target image block.

6. The method according to claim 4, wherein the encoding the target image block identification information and the image block group to obtain encoding information of the gain map comprises:
encoding the target image block identification information to obtain first information;
perform downsampling on the image block group to obtain a to-be-encoded image;
encoding the to-be-encoded image to obtain second information; and
obtaining the encoding information of the gain map based on the first information and the second information.

7. The method according to claim 4, wherein the encoding the target image block identification information and the image block group to obtain encoding information of the gain map comprises:
encoding the target image block identification information to obtain first information;
encoding the image block group to obtain third information; and
obtaining the encoding information of the gain map based on the first information and the third information.

8. The method according to claim 1, further comprising:
determining auxiliary information used for encoding the gain map; and
storing the encoding information and the auxiliary information.

9. The method according to claim 8, wherein the auxiliary information comprises at least one of the following:
first image resolution;
second image resolution;
original resolution of the gain map;
an index of the at least one target image block;
whether to encode the target image block;
an encoding manner;
a downsampling ratio; and
a strategy used for reassembling the at least one target image block.

10. A gain map decoding method, comprising:
obtaining encoding information of a gain map;
decoding the encoding information to obtain an image block group and target image block identification information; and
reconstructing the gain map based on the image block group and the target image block identification information.

11. The method according to claim 10, wherein the reconstructing the gain map based on the image block group and the target image block identification information comprises:
generating at least one target image block based on a first strategy and the image block group; and
reconstructing the gain map based on the at least one target image block and the target image block identification information; wherein
the first strategy indicates a manner of combining the at least one target image block.

12. The method according to claim 11, wherein
the target image block identification information is binary bit information, and each piece of binary bit information corresponds to one source image block in the gain map and indicates whether the source image block is the target image block.

13. The method according to claim 11, wherein the encoding information of the gain map comprises first information and second information, and the decoding the encoding information to obtain an image block group and target image block identification information comprises:
decoding the second information to obtain a decoded image;
performing upsampling on the decoded image to obtain the target image block group; and
decoding the first information to obtain the target image block identification information.

14. The method according to claim 11, wherein the encoding information of the gain map comprises first information and third information, and the decoding the encoding information to obtain an image block group and target image block identification information comprises:
decoding the third information to obtain the image block group; and
decoding the first information to obtain the target image block identification information.

15. The method according to any one of claims 10 to 14, wherein after the reconstructing the gain map based on the image block group and the target image block identification information, the method further comprises:
reconstructing a high-dynamic range HDR image based on the gain map and a standard-dynamic range SDR image; or
reconstructing a generated SDR image based on the gain map and an HDR image.

16. A gain map encoding apparatus, comprising:
a first obtaining module, configured to obtain at least one target image block in a gain map, wherein a luminance value of a pixel in the target image block is greater than a first threshold;
a first processing module, configured to determine target image block identification information of the gain map and an image block group based on the at least one target image block; and
a second processing module, configured to encode the target image block identification information and the image block group to obtain encoding information of the gain map.

17. The apparatus according to claim 16, wherein the first processing module comprises:
a first processing sub-module, configured to generate the target image block identification information based on a location of the at least one target image block in the gain map; and
a second processing sub-module, configured to reassemble the at least one target image block based on a first strategy, to generate the image block group, wherein the first strategy indicates a manner of combining the at least one target image block.

18. A gain map decoding apparatus, comprising:
a second obtaining module, configured to obtain encoding information of a gain map;
a decoding module, configured to decode the encoding information to obtain an image block group and target image block identification information; and
a reconstruction module, configured to reconstruct the gain map based on the image block group and the target image block identification information.

19. The apparatus according to claim 18, wherein the reconstruction module comprises:
a generation sub-module, configured to generate at least one target image block based on a first strategy and the image block group; and
a reconstruction sub-module, configured to reconstruct the gain map based on the at least one target image block and the target image block identification information; wherein
the first strategy indicates a manner of combining the at least one target image block.

20. An electronic device, comprising a processor and a memory, wherein the memory stores a program or instructions capable of being run on the processor, and when the program or the instructions are executed by the processor, the steps of the gain map encoding method according to any one of claims 1 to 9 or the gain map decoding method according to any one of claims 10 to 15 are implemented.

21. A readable storage medium, wherein the readable storage medium stores a program or instructions, and when the program or the instructions are executed by a processor, the steps of the gain map encoding method according to any one of claims 1 to 9 or the gain map decoding method according to any one of claims 10 to 15 are implemented.

22. A chip, wherein the chip comprises a processor and a communication interface, the communication interface is coupled to the processor, and the processor is configured to run a program or instructions to implement the steps of the gain map encoding method according to any one of claims 1 to 9 or the gain map decoding method according to any one of claims 10 to 15.

23. A computer program product, wherein the computer program product is executed by at least one processor to implement the steps of the gain map encoding method according to any one of claims 1 to 9 or the gain map decoding method according to any one of claims 10 to 15.

24. An electronic device, wherein the electronic device is configured to perform the steps of the gain map encoding method according to any one of claims 1 to 9 or the gain map decoding method according to any one of claims 10 to 15.
